# EUROPEAN PATENT APPLICATION

(11) **EP 1 587 094 A2**
(43) Date of publication of application: **19.10.2005**
(21) Application number: 04025558.0
(22) Date of filing: 27.10.2004
(51) Int. Cl.: G11B 15/087

(54) **Tape running device and method for controlling tape running**

(30) Priority: 12.04.2004 KR 2004025046
(71) Applicant: Daewoo Electronics Corporation, Seoul (KR)
(72) Inventor: Kim, Heang Young, Seoul (KR)
(74) Representative: Turi, Michael

(57) **Abstract**

A tape running device of the present invention can stop running of the tape at its ending or beginning portion without using a beginning, an ending and a light emitting element. The tape running device for driving a tape between a supply reel and a take-up reel, if a portion of the tape does not contain information, stops the running of the tape. Alternatively, the tape running device further determines whether or not a supply reel pulse and a take-up reel pulse are generated. And if the supply reel pulse and the take-up reel pulse are not generated, the tape running device stops the running of the tape. Alternatively, the tape running device further determines whether or not a head drum signal is generated. If the head drum signal is not generated, the tape running device stops the running of the tape.

## Description

The present invention relates to a tape running device of a recording/reproducing apparatus, such as a video cassette recorder (VCR), and method for controlling tape running in a tape running device; and more particularly, to a tape running device and a method for controlling tape running, which are capable of stopping the tape running at a beginning portion and ending portion of a tape without using a tape beginning sensor, a tape running sensor and a light emitting element.

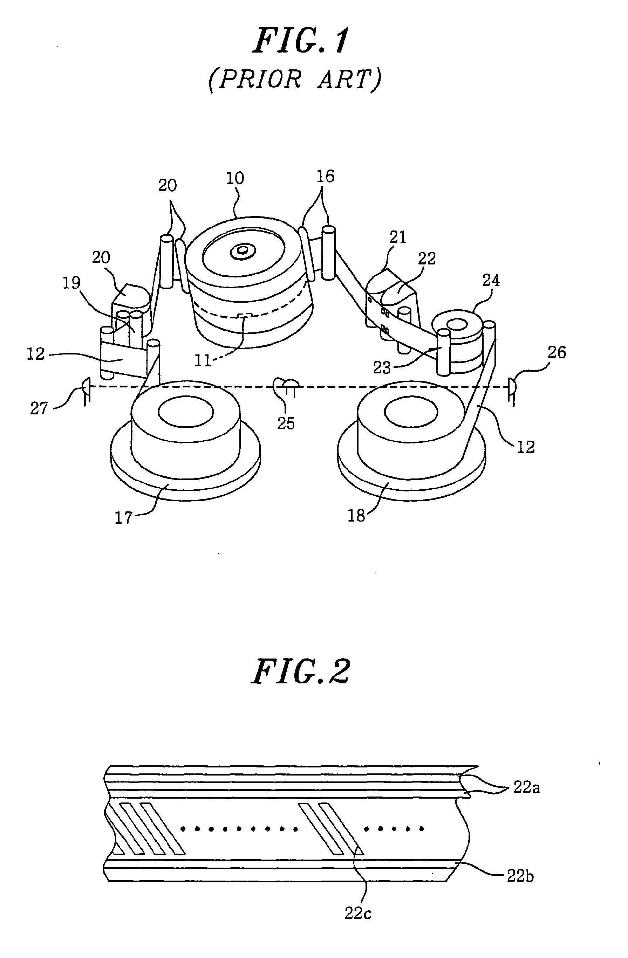

Recording/reproducing apparatuses for recording and reproducing video and audio signals in a magnetic tape, such as video cassette recorders (VCRs), basically includes a tape running device for driving the magnetic tape along a predetermined tape transport path (or tape running path) from one reel to another. Referring to Fig. 1, there is schematically illustrated a perspective view showing main parts of a tape running device in a conventional recording/reproducing apparatus.

As shown in this drawing, the conventional tape running device includes a capstan 23 having a driving motor (not shown) and a pinch roller 24 urging a tape 12 against the capstan 23 so that a rotary driving force exerted by the capstan 23 can be transmitted to the tape 12. And driving force generated by the motor of the capstan 23 is also transmitted through a reel driving device (not shown) to a take-up reel disc 18a or a supply reel disc 17a, so that the tape 12 can be wound around a take-up reel 18 or a supply reel 17 of a video cassette after traveling along the predetermined tape transport path.

Further, the conventional tape running device includes a rotatable head drum assembly 10 around which, when drawn out from the supply reel 17, a portion of the tape 12 is turned at an angle so that video signals can be reproduced therefrom or recorded thereon by means of one or more heads 11.

The conventional tape running device also includes a full eraser head 20, disposed along the tape transport path at a location between the rotatable head drum assembly 10 and the supply reel 17, for erasing video signals stored in bands 22c (shown in Fig. 2) of the tape 12 during a recording mode of the recording/reproducing apparatus, an audio eraser head 21 and an audio/control (A/C) head 22 disposed along the tape transport path at a location between the rotatable head drum assembly 10 and a take-up reel 18. The audio eraser head 21 erases an audio signal stored in audio tracks 22a (shown in Fig. 2) of the tape 12 during the recording mode of the recording/reproducing apparatus, and the audio/control head 22 forms on the tape 12 the audio tracks 22a containing the audio signals, and a control track 22b (shown in Fig. 2) containing control signals (or CTL signals) for accurately controlling the position of the tape 12. In addition, the audio/control head 22 picks up the CTL signals constituting the control track 22b.

As shown in Fig. 1, the conventional tape running device includes a beginning sensor 26, an ending sensor 27 and a light emitting element 25. When a first transparent lead area (not shown) of the tape 12, one end of which is attached to the supply reel 17, is unwound from the supply reel 17 in the fast forward mode, the producing mode or the recording mode, a beam emitted from the light emitting element 25 can reach the ending sensor 27 through the first transparent lead area. And the ending sensor 27 transmits an electrical signal to a controlling device (not shown) of the tape running device upon receiving the beam from the light emitting element 25. Then, the controlling device recognizes that the ending portion of the tape 12 is unwound, i.e., detects the ending portion of the tape 12, and controls the driving motor of the capstan 23 to stop.

Similarly, when a second transparent lead area (not shown) of the tape 12, one end of which is attached to the take-up reel 18, is unwound from the take-up reel 18 in the rewind mode, the beam emitted from the light emitting element 25 can reach the beginning sensor 26 through the transparent second lead area. And the beginning sensor 26 transmits an electrical signal to the controlling device of the tape running device upon receiving the beam from the light emitting element 25. Then, the controlling device recognizes that the beginning portion of the tape 12 is unwound from the take-up reel 18, i.e., detects the beginning portion of the tape, and controls the driving motor of the capstan 23 to stop.

However, as described above, the conventional tape running device employs two sensors and one light emitting element for detecting the beginning portion and ending portion of the tape 12, which results in a complicated manufacturing process and a reduction in working efficiency.

It is, therefore, an object of the present invention to provide a tape running device and a method for controlling tape running, which are capable of stopping the tape running at an ending portion and beginning portion of a tape without employing a beginning and a ending sensor.

In accordance with a first preferred embodiment of the present invention, there is provided a tape running device for driving a tape between a supply reel and a take-up reel, including: a detecting device for scanning a portion of the tape and generating a signal if the information is detected from the portion of the tape; a driving mechanism for supplying to the supply reel or the take-up reel a driving force used to drive the tape between the supply reel and the take-up reel; and a controlling device for controlling the driving device, wherein the controlling device performs a first step of determining whether or not the information is contained in a portion of the tape by using the signal from the detecting device, and wherein if the portion of the tape has no information therein, the controlling device performs a second step of controlling the driving device to stop supplying the driving force.

In accordance with a second preferred embodiment of the present invention, there is provided with a tape running device for driving a tape between a supply reel and a take-up reel, including: an input device for producing a selection signal in response to a user's selection, the selection signal indicating the user's selection; a driving mechanism for supplying to the supply reel or the take-up reel a driving force used to drive the tape between the supply reel and the take-up reel; a controlling device for controlling the driving mechanism and determining which mode among a recording mode, a producing mode, a fast forward mode and a rewind mode is selected depending on the selection signal; a supply reel pulse generator for generating a supply reel pulse in response to a rotation of the supply reel; and a take-up reel pulse generator for generating a take-up reel pulse in response to a rotation of the take-up reel, wherein the controlling device calculates a REW reel pulse ratio in the rewind mode by using the supply reel pulse and the take-up reel pulse and then compares the REW reel pulse ratio with a predetermined value, and wherein if the REW reel pulse ratio is equal to or greater than the predetermined value in a rewind mode, the controlling device controls the driving mechanism to reduce the driving force.

In accordance with a third preferred embodiment of the present invention, there is provided with a method for controlling running of a tape in a tape running device which includes a detecting device for scanning a portion of the tape and generating a signal if information is detected from the portion of the tape, and a driving mechanism for supplying to a supply reel and a take-up reel a driving force used to drive the tape between the supply reel and the take-up reel, the method including the steps of: (a) controlling the driving mechanism to supply the driving force, so that the tape is driven; (b) determining whether or not the portion of the tape contains the information by scanning the portion of the tape; (c) if the information is detected, repeating the step (b); and (d) if the information is not detected, controlling the driving mechanism to stop supplying the driving force.

The above and other objects and features of the present invention will become apparent from the following description of preferred embodiments given in conjunction with the accompanying drawings, in which:
Fig. 1 is a perspective view showing main parts of a tape running device in a conventional recording/reproducing apparatus;
Fig. 2 presents a schematic plan view of a magnetic tape used in a conventional recording/reproducing apparatus;
Fig. 3 depicts a schematic block diagram of a tape running device of a recording/reproducing apparatus in accordance with a preferred embodiment of the present invention;
Figs. 4A and 4B offer a flow chart for showing the operation of the controlling device of the tape running device of Fig. 3; and
Fig. 5 sets forth graphs illustrating the supply and take-up reel pulses generated from the supply reel pulse generator and the take-up reel pulse generator of Fig. 3, while the tape is transported from the take-up reel to the supply reel at a high speed, i.e., the recording/reproducing apparatus is operated in the REW mode.

A preferred embodiment of the present invention will now be described in detail with reference to the accompanying drawings.

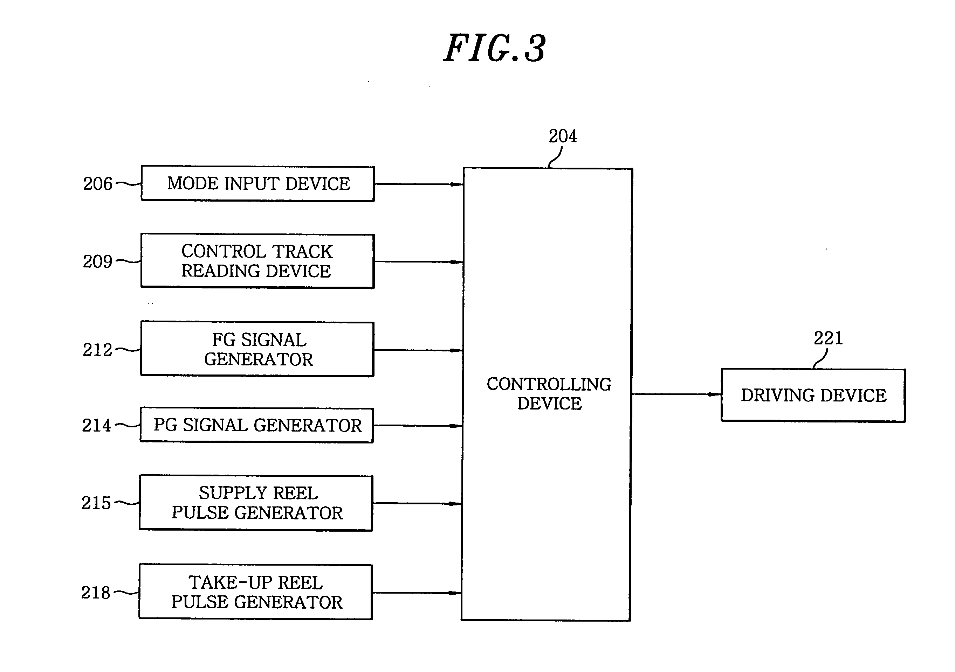

Referring to Fig. 3, there is presented a schematic block diagram of a tape running device of a recording/reproducing apparatus in accordance with a preferred embodiment of the present invention. As shown in Fig. 3, the tape running device includes a mode input device 206 for generating a mode signal according to a user's mode selection, such as a recording mode, a reproducing mode, a fast-forward mode or a rewind mode selection; a control track reading device 209, such as an audio/control head, for generating a CTL signal in response to information stored in a control track of a tape, a recording medium; a head drum frequency generator (FG) 212 and pulse generator (PG) 214 for generating FG and PG signals in response to a rotation of a rotatable head drum assembly; a supply reel pulse generator 215 for generating supply reel pulses in response to a rotation of a supply reel disk which is rotated with a supply reel of the video cassette; and a take-up reel pulse generator 218 for generating take-up reel pulses in response to a rotation of a take-up reel disk which is rotated with a take-up reel of the video cassette.

The control track reading device 209 generates the CTL signal in case a portion of the tape which the control track reading device 209 reads contains the information, e.g., as to how quickly to drive the tape past the rotatable head drum assembly. Meanwhile, if the portion of the tape does not contain information just as lead areas, i.e., a beginning portion and ending portion of the tape, the reading device 209 does not generate the CTL signal. In addition, the frequency and the pulse generator 212 and 214 generate the FG and PG signals, respectively when the rotatable head drum assembly is rotating. Moreover, the supply reel pulse generator 215 generates the supply reel pulse when the supply reel is rotating, and the take-up reel pulse generator 218 generates the take-up reel pulse when the take-up reel is rotating.

Further, the tape running device of the present invention includes a controlling device 204 which receives signals and pulses generated from the mode input device 206, the control track reading device 209, the frequency and the pulse generator 212 and 214, and the supply reel and the take-up reel pulse generators 215 and 218. And by using these signals and pulses, the controlling device 204 controls a driving device 221 which supplies a driving force to the supply or the take-up reel disk through a reel driving device in order to transport the tape along a tape transport path between the supply reel, the head drum assembly and the take-up reel.

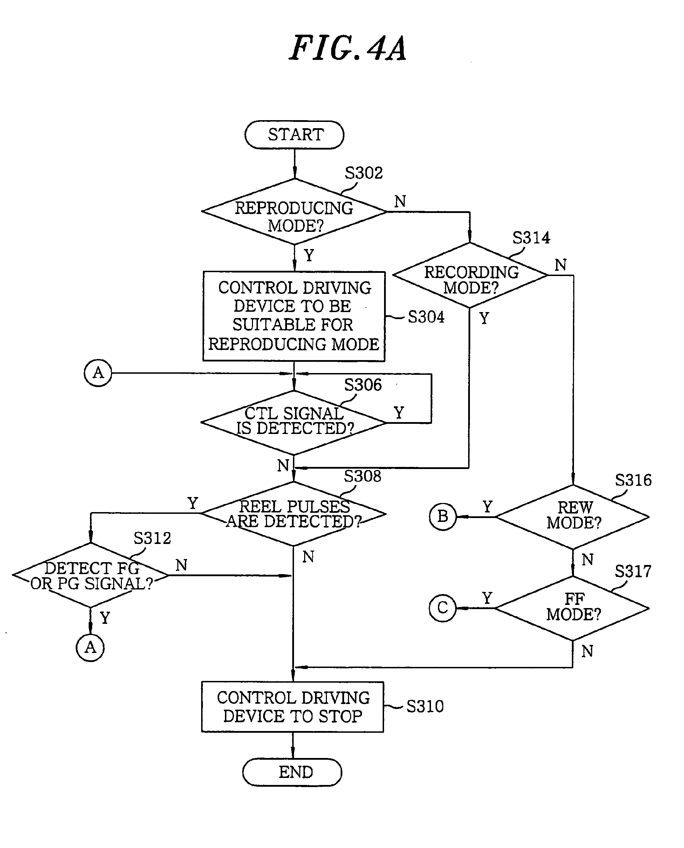

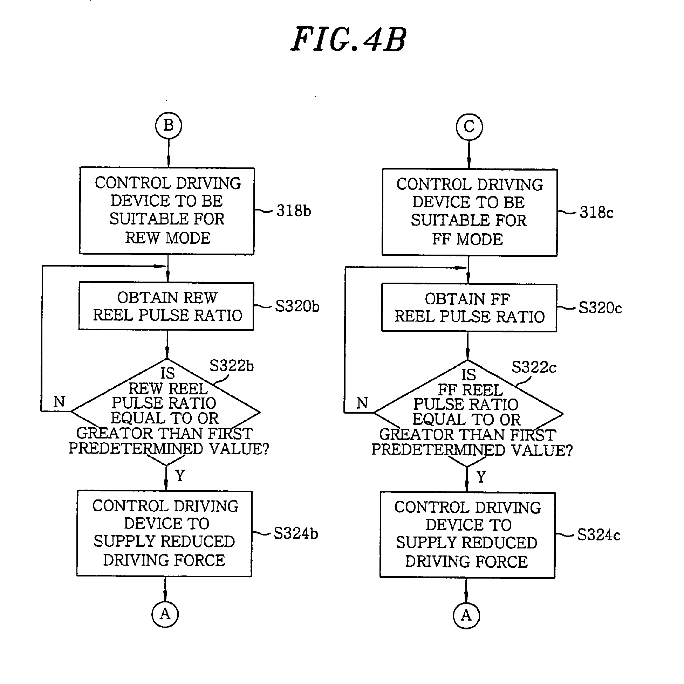

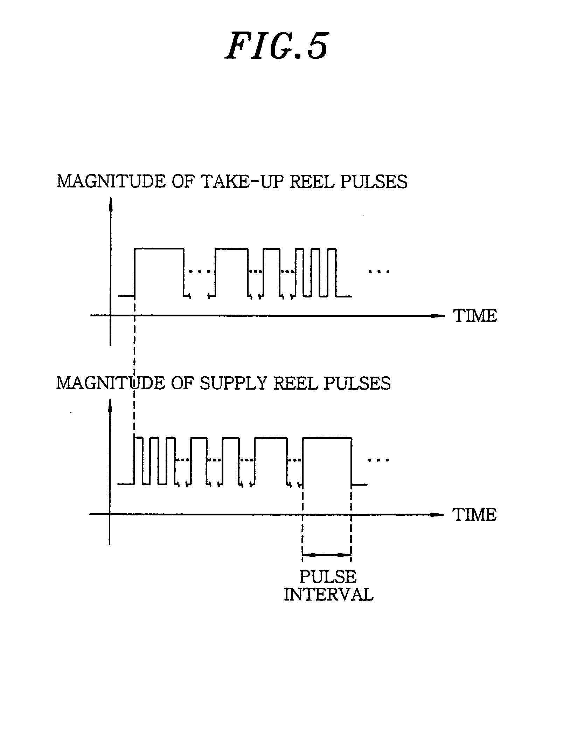

The operation of the tape running device of the present invention will now be described in detail with reference to Figs. 4A, 4B and 5.

Referring to Figs. 4A and 4B, there is presented a flow chart for showing the operation of the controlling device of the tape running device of Fig. 3.

After the video cassette containing the tape is loaded into the tape running device of the recording/reproducing apparatus, the controlling device 204 determines, through steps S302, S314, S316 and S317, which operation mode is selected among the recording, the reproducing, the fast forward and the rewind mode by the user depending on the mode signal from the mode input device 206. If the reproducing mode is selected, the controlling device 204 performs step S304 in which the controlling device 204 controls the driving device 221 to supply the driving force suitable for the reproducing mode, so that the tape is transported from the supply reel to the take-up reel at a speed suitable for the reproducing mode. Then, at step S306, the controlling device 204 determines whether or not the CTL signal is generated from the control track reading device 209 which scans the tape being transported. If the CTL signal is generated, the controlling device 204 repeats step S306, i.e., determines whether or not the CTL signal is generated in a predetermined time period. On the contrary, if the CTL signal is not generated, the controlling device 204 determines, at step S308, whether or not the supply and the take up reel pulse from the supply reel pulse generator 215 and the take-up reel pulse generator 218 are generated. If neither the supply reel pulse nor the take-up reel pulse signal is generated, the controlling device 204 performs step S310 in which the controlling device 204 controls the driving device 221 to stop supplying the driving force. On the contrary, if either the supply reel pulse or the take-up reel pulse is generated, the controlling device 204 performs step S312 in which the controlling device 204 determines whether or not the FG and the PG signal are generated. If either the FG or the PG signal is generated, the controlling device 204 performs the step S306. On the contrary, if neither the FG nor the PG signal is generated, the controlling device 204 performs step S310 of controlling the driving device 221 to stop supplying the driving force.

At step S302, if the reproducing mode is not selected, the controlling device 204 performs step S314 of determining whether or not the recording mode is selected by the user. If the recording mode is selected, the controlling device 204 performs step S308. Meanwhile, if the recording mode is not selected, the controlling device 204 determines through steps S316 and S317, whether the rewind or the fast forward mode is selected by the user. If neither the rewind nor the fast forward mode is selected, the controlling device 204 performs step S310.

If the REW mode is selected, the controlling device 204 performs step S318b (shown in Fig. 4B) in which the controlling device 204 controls the driving device 221 to supply the driving force suitable for the REW mode, so that the tape is transported from the take-up reel to the supply reel at a high speed. Then the controlling device 204 calculates, at step S320b, a REW reel pulse ratio (described below), a ratio of a pulse interval (or pulse duration) of the supply reel pulse to a pulse interval of the take-up reel pulse.

Referring to Figs. 5, there are illustrated the supply and take-up reel pulses generated from the supply reel pulse generator and the take-up reel pulse generator of Fig. 3, while the tape is transported from the take-up reel to the supply reel at a high speed, i.e., the recording/reproducing apparatus is operated in the REW mode. As shown in this drawing, as the tape is transported from the take-up reel to the supply reel, the pulse intervals of take-up reel pulses are getting shorter since a rotational speed of the take-up reel increases. On the contrary, the pulse intervals of supply reel pulses are getting longer since a rotational speed of the supply reel decreases due to an increasing weight of the tape wound around the supply reel as the tape is transported from the take-up reel to the supply reel. Therefore, the REW reel pulse ratio becomes greater as the tape is transported from the take-up reel to the supply reel and the amount of the tape remaining around the take-up reel can be calculated by using the REW reel pulse ratio.

Referring now back to Fig. 4B, the controlling device 204 subsequently performs step S322b of determining whether or not the REW reel pulse ratio is equal to or greater than a first predetermined value. If the REW reel pulse ratio is equal to or greater than the first predetermined value, the amount of the tape remaining around the take-up reel is below a predetermined level and the controlling device 204 controls, at step 324b, the driving device 221 to supply the driving force reduced by a predetermined amount, so that a transportation speed of the tape is decreased. Then, the controlling device 204 performs step S306 and following steps. Meanwhile, if the REW reel pulse ratio is less than the first predetermined value, the controlling device 204 repeats step S320b and step S322b in a predetermined time period.

If the FF mode is selected at step S317, the controlling device 204 performs step S318c (see Fig. 4B) in which the controlling device 204 controls the driving device 221 to supply the driving force suitable for the FF mode, so that the tape is transported from the supply reel to the take-up reel at a high speed. Then the controlling device 204 calculates, at step S320c, a FF reel pulse ratio, a ratio of a pulse interval (or pulse duration) of the take-up reel pulse to a pulse interval of the supply reel pulse.

Subsequently, the controlling device 204 performs step S322c of determining whether or not the FF reel pulse ratio is equal to or greater than a second predetermined value. If the FF reel pulse ratio is equal to or greater than the second predetermined value, the amount of the tape remaining around the supply reel is below a predetermined level and the controlling device 204 controls, at step S324c, the driving device 221 to supply the driving force reduced by a predetermined amount, so that the transportation speed of the tape is decreased. Then, the controlling device 204 performs step S306 and following steps. Meanwhile, if the FF reel pulse ratio is less than the second predetermined value, the controlling device 204 repeats step S320c and step S322c in a predetermined time period.

As detailed above, the tape running device of the present invention can control the tape running by detecting the beginning and ending portions of the tape without using an ending sensor, a beginning sensor and a light emitting element. Therefore, manufacturing cost and manufacturing time for the tape running device can be effectively reduced.

While the invention has been shown and described with respect to the preferred embodiments, it will be understood by those skilled in the art that various changes and modifications may be made without departing from the scope of the invention as defined in the following claims.

## Claims

1. A tape running device for driving a tape between a supply reel and a take-up reel, comprising:
a detecting device for scanning a portion of the tape and generating a signal if the information is detected from the portion of the tape;
a driving mechanism for supplying to the supply reel or the take-up reel a driving force used to drive the tape between the supply reel and the take-up reel; and
a controlling device for controlling the driving device,
wherein the controlling device performs a first step of determining whether or not the information is contained in a portion of the tape by using the signal from the detecting device, and
wherein if the portion of the tape has no information therein, the controlling device performs a second step of controlling the driving device to stop supplying the driving force.

2. The tape running device of claim 1, wherein the tape includes a control track which stores the information which the detecting device detects.

3. The tape running device of claim 1, further comprising:
a supply reel pulse generator for generating a supply reel pulse in response to a rotation of the supply reel; and
a take-up reel pulse generator for generating a take-up reel pulse in response to a rotation of the take-up reel,
wherein after performing the first step, if the information is not contained in the portion of the tape, the controlling device performs, before performing the second step, a third step of determining whether or not the supply reel pulse and the take-up reel pulse are generated,
wherein if the supply reel pulse and the take-up reel pulse are not generated, the controlling device performs the second step, and
wherein if either the supply or the take-up reel pulse is generated, the controlling device repeats the first step.

4. The tape running device of claim 3, further comprising:
a rotatable head drum assembly having one or more heads for recording and reproducing a video signal in the tape; and
a head drum signal generator for generating a head drum signal indicating a rotation of the head drum assembly,
wherein after performing the third step, if either the supply reel pulse or the take-up reel pulse is generated, the controlling device, before repeating the first step, determines whether or not the head drum signal is generated,
wherein if the head drum signal is generated, the controlling device repeats the first step, and
wherein if the head drum signal is not generated, the controlling device performs the second step.

5. The tape running device of claim 4, wherein the head drum signal generator is one of a frequency generator and a pulse generator.

6. The tape running device of claim 3, further comprising:
an input device for generating a selection signal in response to a user's selection, the selection signal indicating the user's selection,
wherein the controlling device determines which mode among a recording mode, a producing mode, a fast forward mode and a rewind mode is selected depending on the selection signal,
wherein if the user's selection is the reproducing mode, the controlling device controls the driving device to supply the driving force suitable for the reproducing mode and then performs the first step, and
wherein if the user's selection is the recording mode, the controlling device controls the driving device to supply the driving force suitable for the recording mode and then performs the third step.

7. The tape running device of claim 6, wherein if the user's selection is the rewind mode, the controlling device controls the driving device to supply the driving force suitable for the rewind mode, calculates a REW reel pulse ratio by using the supply reel pulse and the take-up reel pulse and then compares the REW reel pulse ratio with a predetermined value, and
wherein if the REW reel pulse ratio is equal to or greater than the predetermined value, the controlling device controls the driving device to reduce the driving force and then performs the step.

8. The tape running device of claim 6, wherein if the user's selection is the fast forward mode, the controlling device controls the driving device to supply the driving force suitable for the fast mode, calculates a FF reel pulse ratio by using the supply reel pulse and the take-up reel pulse and then compares the FF reel pulse ratio with a predetermined value, and
wherein if the FF reel pulse ratio is equal to or greater than the predetermined value mode, the controlling device controls the driving device to reduce the driving force and then performs the first step.

9. A tape running device for driving a tape between a supply reel and a take-up reel, comprising:
an input device for producing a selection signal in response to a user's selection, the selection signal indicating the user's selection;
a driving mechanism for supplying to the supply reel or the take-up reel a driving force used to drive the tape between the supply reel and the take-up reel;
a controlling device for controlling the driving mechanism and determining which mode among a recording mode, a producing mode, a fast forward mode and a rewind mode is selected depending on the selection signal;
a supply reel pulse generator for generating a supply reel pulse in response to a rotation of the supply reel; and
a take-up reel pulse generator for generating a take-up reel pulse in response to a rotation of the take-up reel,
wherein the controlling device calculates a REW reel pulse ratio in the rewind mode by using the supply reel pulse and the take-up reel pulse and then compares the REW reel pulse ratio with a predetermined value, and
wherein if the REW reel pulse ratio is equal to or greater than the predetermined value in a rewind mode, the controlling device controls the driving mechanism to reduce the driving force.

10. The tape running device of claim 9, wherein the controlling device calculates a FF reel pulse ratio in the fast forward mode by using the supply reel pulse and the take-up reel pulse and then compares the FF reel pulse ratio with another predetermined value, and
wherein if the FF reel pulse ratio is equal to or greater than said another predetermined value, the controlling device controls the driving mechanism to reduce the driving force.

11. A method for controlling running of a tape in a tape running device which includes a detecting device for scanning a portion of the tape and generating a signal if information is detected from the portion of the tape, and a driving mechanism for supplying to a supply reel and a take-up reel a driving force used to drive the tape between the supply reel and the take-up reel, the method comprising the steps of:
(a) controlling the driving mechanism to supply the driving force, so that the tape is driven;
(b) determining whether or not the portion of the tape contains the information by scanning the portion of the tape;
(c) if the information is detected, repeating the step (b); and
(d) if the information is not detected, controlling the driving mechanism to stop supplying the driving force.

12. The method of claim 11, wherein the tape includes a control track which contains the information which the detecting device detects.

13. The method of claim 11, wherein the tape running device further includes a supply reel pulse generator for generating a supply reel pulse in response to a rotation of a supply reel, and a take-up reel pulse generator for generating a take-up reel pulse in response to a rotation of a take-up reel, the method further comprising the steps of:
(e) before performing the step (d), determining whether or not the supply reel pulse and the take-up reel pulse are generated; and
(f) if the supply reel pulse and the take-up reel pulse are generated, repeating the step (b),
wherein if the supply reel pulse and the take-up reel pulse signal are not detected, the step (d) is performed.

14. The method of claim 13, wherein the tape running device further includes a rotatable head drum assembly having one or more head for recording and reproducing a signal in the tape, and a head drum signal generator for generating a head drum signal indicating a rotation of the rotatable head drum assembly, the method further comprising the steps of:
(g) before performing the step (d), determining whether or not the head drum signal is generated; and
(h) if the head drum signal is generated, repeating the step (b),
wherein if the head drum signal is not generated, the step (d) is performed.

15. The method of claim 14, wherein the tape running device further includes an input device for generating a selection signal in response to a user's selection, the selection signal indicating the user's selection, the method further comprising the steps of:
(i) determining which mode among a recording mode, a producing mode, a fast forward mode and a rewind mode is selected depending on the selection signal; and
(j) if the user's selection is the rewind mode, before performing the step (b), performing the substeps of:
(j-1) calculating a REW reel pulse ratio by using the supply reel pulse and the take-up reel pulse;
(j-2) comparing the REW reel pulse with a predetermined value;
(j-3) if the REW reel pulse ratio is less than the predetermined value, repeating the steps (j-1) and (j-2); and
(j-4) if the REW reel pulse ratio is equal to or greater than the predetermined value, controlling the driving mechanism to reduce the driving force, so that a transportation speed of the tape is decreased.

16. The method of claim 14, wherein the tape running device further includes an input device for generating a selection signal in response to a user's selection, the selection signal indicating the user's selection, the method further comprising the steps of:
(i) determining which mode among a recording mode, a producing mode, a fast forward mode and a rewind mode is selected depending on the selection signal; and
(j) if the user's selection is the fast forward mode, before performing the step (b), performing the substeps of:
(j-1) calculating a FF reel pulse ratio by using the supply pulse and the take-up reel pulse;
(j-2) comparing the FF reel pulse with a predetermined value;
(j-3) if the FF reel pulse ratio is less than the predetermined value, repeating the steps (j-1) and (j-2); and
(j-4) if the FF reel pulse ratio is equal to or greater than the second predetermined value, controlling the driving mechanism to reduce the driving force, so that a transportation speed of the tape is decreased.
